Europäisches Patentamt

European Patent Office

Office européen des brevets

(11) Publication number: **0 421 301 A2**

## (12) EUROPEAN PATENT APPLICATION

(21) Application number: 90118698.1

(51) Int. Cl.⁵: **B60N 2/18**

(22) Date of filing: 28.09.90

(30) Priority: 30.09.89 JP 115177/89 U

(43) Date of publication of application:
**10.04.91 Bulletin 91/15**

(84) Designated Contracting States:
**DE ES GB**

(71) Applicant: **FUJIKIKO KABUSHIKI KAISHA**
**1-13 Nihonbashihoncho 3-chome, Chuou-ku**
**Tokyo(JP)**

(72) Inventor: **Matsuura, Hiroshi, c/o Fujikiko**
**Kabushiki Kaisha**
**Washizu-kojyo, 2028 Washizu**
**Kosai-shi Shizuoka-ken(JP)**

(74) Representative: **Patentanwälte Grünecker,**
**Kinkeldey, Stockmair & Partner**
**Maximilianstrasse 58**
**W-8000 München 22(DE)**

(54) **Vehicle seat.**

(57) In a vehicle seat provided with a seat cushion height adjusting device, at least one seat lift handle and a seat lifting device are assembled into a unit and removably mounted between a pair of seat base plates, so that the additional seat cushion height adjusting device can be readily mounted under ordinary vehicle seats provided with no such adjusting device, thus standardizing the seat base plates to reduce the stock cost thereof.

# FIG.1

## VEHICLE SEAT

### BACKGROUND OF THE INVENTION

#### Field of the Invention

The present invention relates to a vehicle seat provided with a seat lifting device for adjusting the height of the seat cushion.

#### Description of the Prior Art

There exists a certain conventional seat lifting device for an automotive vehicle which is mounted on a seat base plate of a vehicle seat, so that the height of a seat cushion from a vehicle body floor can be adjusted within a predetermined range to each driver's preferable height, according to the driver's stature or sitting height.

On the other hand, since there are vehicle seats provided with no such seat lifting device, conventionally seat base plates of different types are required separately, according to the presence or absence of the seat lifting device. However, where different seat base plates are required according to vehicle seats of different specifications, since various seat base plates must be prepared, there exists a problem in that the quality management is complicated and therefore the manufacturing cost is high.

### SUMMARY OF THE INVENSION

With these problems in mind, therefore, the primary object of the present invention is to provide a vehicle seat provided with a unified seat lifting device so modified as to be readily attachable to the ordinary vehicle seat provided with no such seat lifting device.

To achieve the above-mentioned object, a vehicle seat according to the present invention having: (a) a seat cushion frame (60) for mounting a seat cushion (SC); (b) a pair of seat base plates (40A, 40B) arranged in parallel to each other at an interval; (c) at least one seat lift handle (10); and (d) a seat lifting device (20) actuated by said seat lift handle, for adjustably lifting said seat cushion frame, said at least one seat lift handle and said seat lifting device being assembled into a unit and removably mounted between a pair of said seat base plates. The at least one seat lift handle is a seat-front lift handle (10A) for adjustably moving up and down a front part of the seat cushion; and said seat lifting device comprises: (a) a pair of mounting frames (22A, 22B) fixed to an inside surface of one (40A) of said seat base plates, for rotatably supporting an axle (24A) of said seat front lift handle (10A); (b) a front pinion gear (25A) rotatably supported between said two mounting frames and fixed to said seat front lift handle coaxially therewith; (c) a front sector gear (26A) rotatably supported between said two mounting frames in mesh with said front pinion gear; (d) a front spring brake mechanism (27A) fixed on an outside surface of said mounting frame coaxially with said seat front lift handle; (e) a front shaft (30A) rotatably supported between said two seat base plates (40A, 40B) under the front part of said seat cushion frame and coaxially with said front sector gear; (f) a front sector gear link (31A) for linking said front sector gear (26A) with said front shaft (30A); and (g) at least two front shaft link levers (31, 29, 32, 33) connected between said front shaft (30A) and said seat cushion frame (60), for moving up and down the front part of said seat frame when said seat front lift handle is rotated. Further, in usual the vehicle seat further comprises: (a) a seat rear lift handle (10B) rotatably supported by said mounting frame, for adjustably moving up and down a rear part of the seat cushion; (b) a rear pinion gear (25B) rotatably supported between said two mounting frames and fixed to said seat rear lift handle coaxially therewith; (c) a rear sector gear (26B) rotatably supported between said two mounting frames in mesh with said rear pinion gear; (d) a rear spring brake mechanism (27B) fixed on an outside surface of said mounting frame coaxially with said seat rear lift handle; (e) a rear shaft (30B) rotatably supported between said two seat base plates (40A, 40B) under the rear part of said seat cushion frame; (f) a rear sector gear link (34) for linking said rear sector gear (26B) with said rear shaft (30B); and (g) at least two rear shaft link levers (35, 36) connected between said rear shaft (30B) and said seat cushion frame (60), for moving up and down the rear part of said seat frame when said seat rear handle is rotated. The mounting frames (22) for housing the two pinion gears (25A, 25B) and the two sector gears (26A, 26B) are disposed on an inside surface of the seat base plate (40A). The two spring brake mechanisms (27A, 27B) and the two seat lift handles (10A, 10B) are disposed over and outside the seat base plate (40A).

In the vehicle seat according to the present invention, since the seat lifting handles and the seat lifting device are formed into a unit, it is possible to readily realize vehicle seats of different specifications (e.g. provided with or without the seat lifting device) by mounting or removing the unified seat lifting device on or from the seat base plates. Since common seat base plates can be used in common for various vehicle seats of different types, it is possible to reduce the stock cost thereof.

BRIEF DESCRIPTION OF THE DRAWINGS

Fig. 1 is a side view showing the vehicle seat provided with the seat lift handles and the seat lifting device according to the present invention;
Fig. 2 is a plan view showing the vehicle seat according to the present invention;
Fig. 3 is a side view showing the seat lifting device according to the present invention when seen from the line 3-3 in Fig. 2;
Fig. 4 is a similar side view when seen from the line 4-4 in Fig. 2; and
Fig. 5 is a similar side view when seen from the line 5-5 in Fig. 2.

DETAILED DESCRIPTION OF THE PREFERRED EMBODIMENTS

The embodiments of the vehicle seats according to the present invention will be described hereinbelow with reference to the attached drawings.

The vehicle seat E of the present invention is so constructed that the front and rear parts of a seat cushion SC can be moved up and down by rotating two seat lift handles 10A and 10B respectively in the clockwise or counterclockwise directions.

The feature of the vehicle seat according to the present invention is to unify the two seat lift handles 10A and 10B and a seat lifting device 20 so as to be mounted between two seat base plates 40A and 40B. The seat lifting device 20 transmits a force to move the seat cushion up and down in linkage with the rotative motion of the seat lift handle 10A or 10B.

The construction of the vehicle seat according to the present invention will be described in further detail hereinbelow.

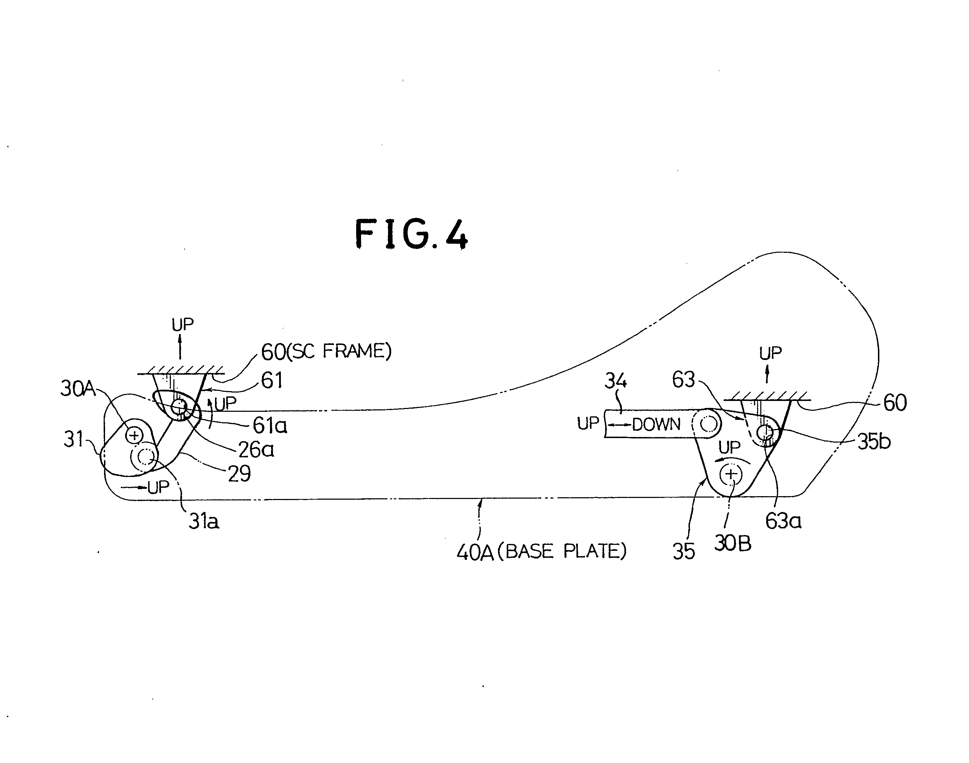

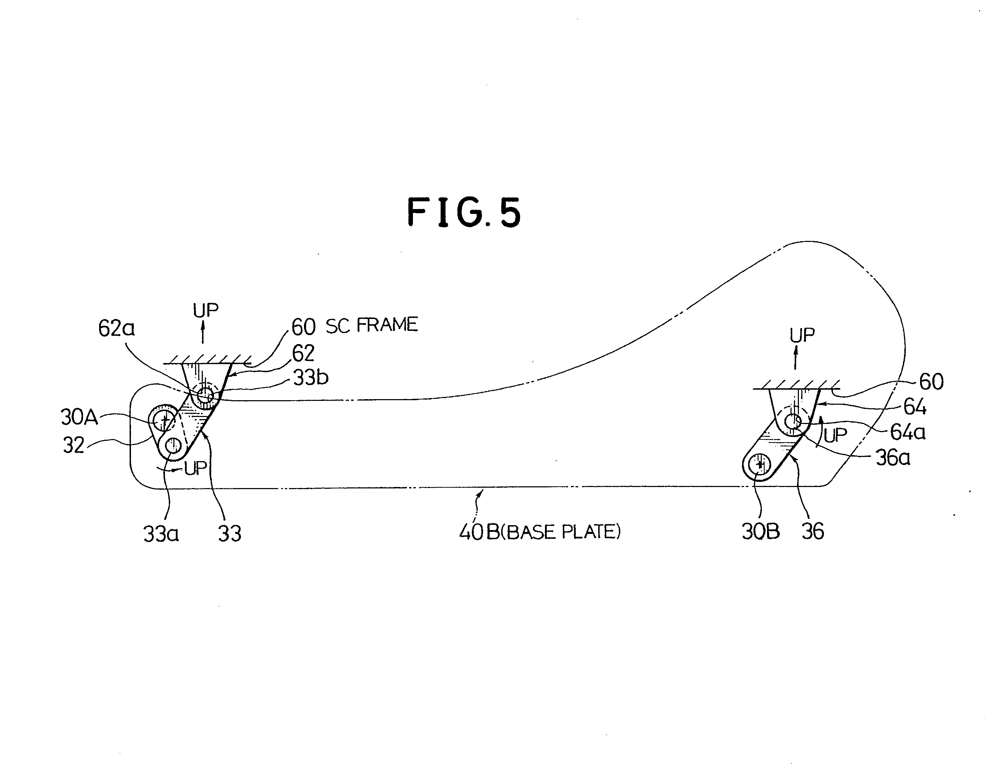

A pair of lower rails 50 as the seat slide device are arranged on a vehicle floor (not shown) extending in the vehicle front and rear direction (the arrow directions F and R) with a predetermined interval. Further, a pair of upper rails 51 are slidably engaged with the outside surfaces of the lower rails 50, respectively. A pair of seat base plates 40A and 40B are fixed to the upper rails 51, respectively. A seat cushion frame 60 (see Figs. 4 and 5) for fixing the seat cushion SC is supported between these two seat base plates 40A and 40B via the seat lifting device 20. A seat back SB tiltable through a predetermined angle in the front and rear direction is supported between the two seat base plates 40A and 40B via a reclining device (not shown).

Two pinion gears 25A and 25B and two sector gears 26A and 26B of the seat lifting device 20 are housed between a pair of mounting frames 22A and 22B, and two axles 24A and 24B of the two seat lift handles 10A and 10B are rotatably supported by the mounting frames 22A and 22B. The mounting frames 22A and 22B are fixed to the inside surface of the base plate 40A with two caulked pins 21. Further, two spring braking mechanisms 27A and 27B are fixed on the outside surface of the mounting frame 22B coaxially with the seat lift handles 10A and 10B, respectively. The spring braking mechanism 27A or 27B is a flat spiral spring, for instance whose outer end is connected to the mounting frame 22B and whose inner end is free in contact with the outer circumferential surface of the axle 24A or 24B of the seat lift handle 10A or 10B. When the seat lift handle 10A or 10B is rotated clockwise, for instance to move up the seat cushion frame 60, since the inner end of the spiral spring is slid on the axle 24A or 24B in the winding off direction, the seat lift handle 10A or 10B is rotatable. However, when a strong torque by the driver's weight on the basis of the leverage action is momentarily applied to the axle 24A or 24B in the winding up direction (counterclockwise direction of the seat lift handle 10A or 10B), a braking force can be generated between the spiral spring and the axle 24A or 24B because the spring is wound up by the axle 24A or 24B by frictional force. In this connection, when the seat lift handle 10A or 10B is rotated counterclockwise to move down the seat cushion frame 60, since the axle 24A or 24B is rotated slowly in winding up direction in contact with the inner end of the spiral spring, the spiral spring can be slipped on the axle smoothly without generating a brake force.

The two pinion gears 25A and 25B are fixed to the two axles 24A and 24B, respectively and rotatably supported between the two mounting frames 22A and 22B coaxially with the seat lift handles 10A and 10B.

The two sector gears 26A and 26B are fixed to two axles 28A and 28B, respectively and also rotatably supported between the two mounting frames 22A and 22B in mesh with the pinion gears 25A and 25B, respectively.

Further, the outer circumferential edge portion of the mounting frame 22A is bent for protection of the seat cushion SC from damage. In this embodiment, since these various gears are covered by the mounting frames 22, no gear cover is additionally required.

Further, the lower end portion of the two mounting frames 22A and 22B extends toward the upper rail 51 to such an extent that the extension portion 22a thereof is brought into contact with the side surface of the upper rail 51, in order to increase the rigidity of the mounting frames 22 in the transversal direction.

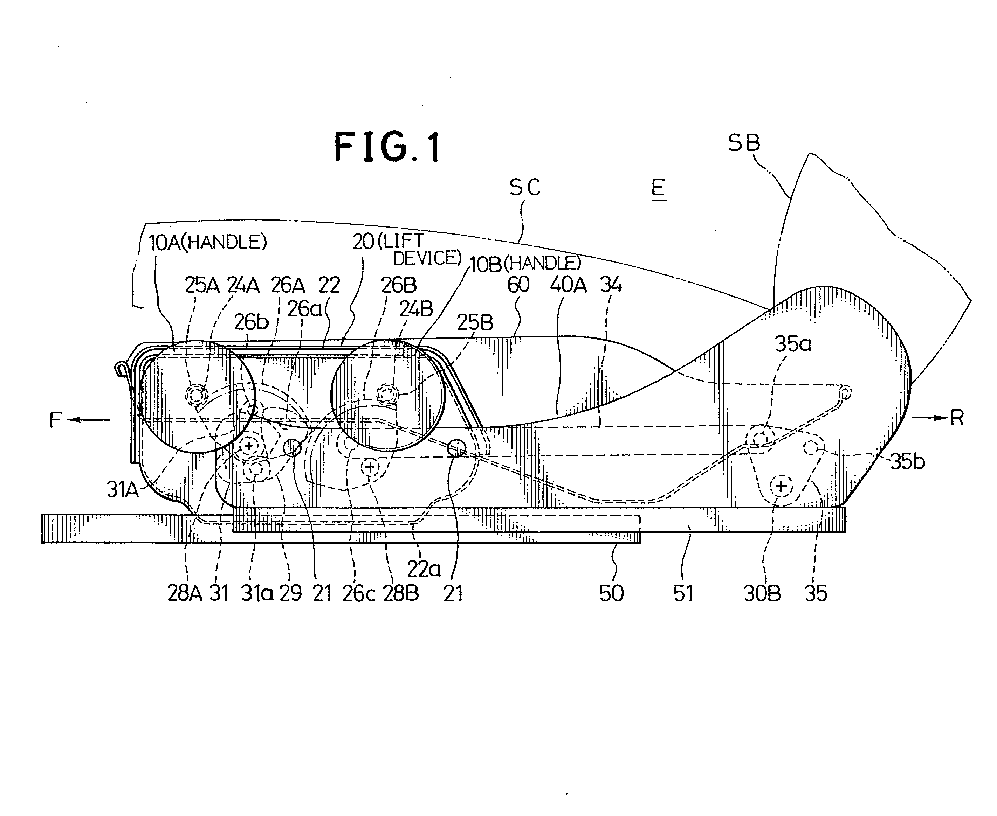

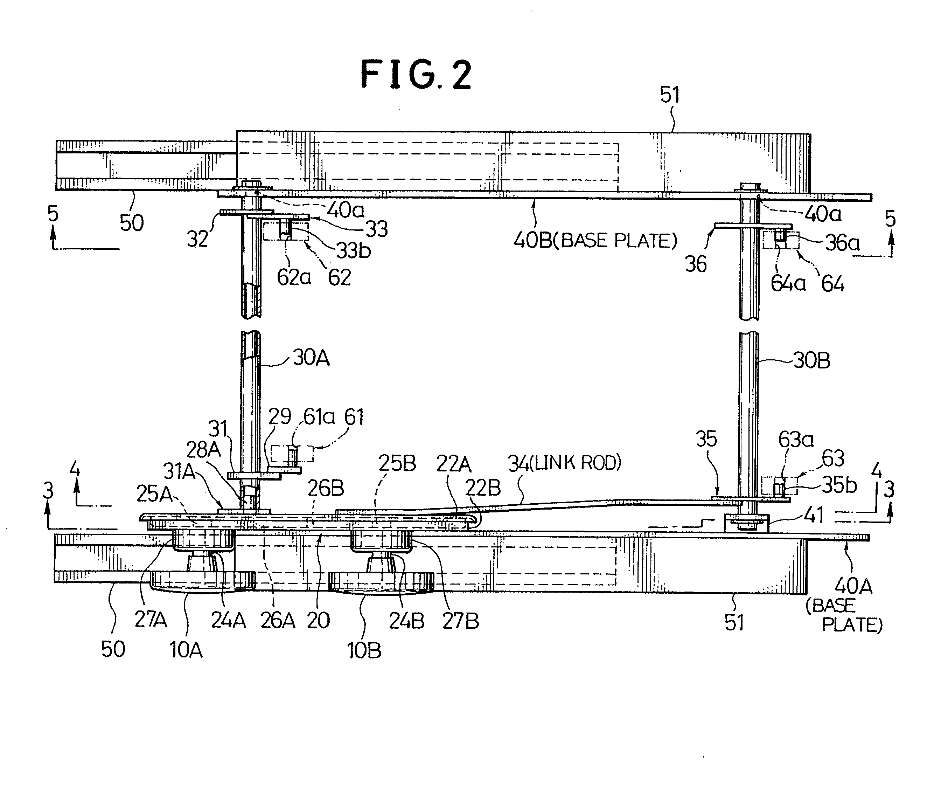

As depicted in Fig. 2, one end of a pipe-shaped front shaft 30A is pivotally supported by the axle 28A, and the other end of the front shaft 30A is pivotally supported by a hole 40a formed in the seat base plate 40B, so that the front shaft 30A is pivotally supported between the mounting frame 22A and the seat base plate 40B. A front sector gear link member 31A (shown in Figs. 1 and 2) fixed to the front shaft 30A is linked with the front sector gear 26A via a pin 26b (see Fig. 1).

As depicted in Fig. 4, a first front link lever 31 is fixed to the front shaft 30A. A second front link lever 29 is connected to the first front link lever 31 via a pin 31a. A pin 26a fixed to an end of the second front link lever 29 is pivotally linked with a hole 61a formed in a bracket 61 fixed to the front portion of the seat cushion frame 60.

Similarly, as depicted in Fig. 5, a third front link lever 32 similar to the first front link lever 31 in the leverage dimension is fixed to the front shaft 30A. A fourth front link lever 33 similar to the second front link lever 29 in the leverage dimension is. connected to the third front link lever 32 via a pin 33a. A pin 33b fixed to an end of the fourth front link lever 33 is pivotally linked with a hole 62a formed in a bracket 62 fixed to the front portion of the seat cushion frame 60.

As depicted in Fig. 2, one end of a rear shaft 30B is pivotally supported by a hole formed in a bracket 41 fixed to the seat base plate 40A and the other end of the rear shaft 30B is pivotally supported by a hole 40a formed in the seat base plate 40B, so that the rear shaft 30B is pivotally supported between the two seat base plates 40A and 40B.

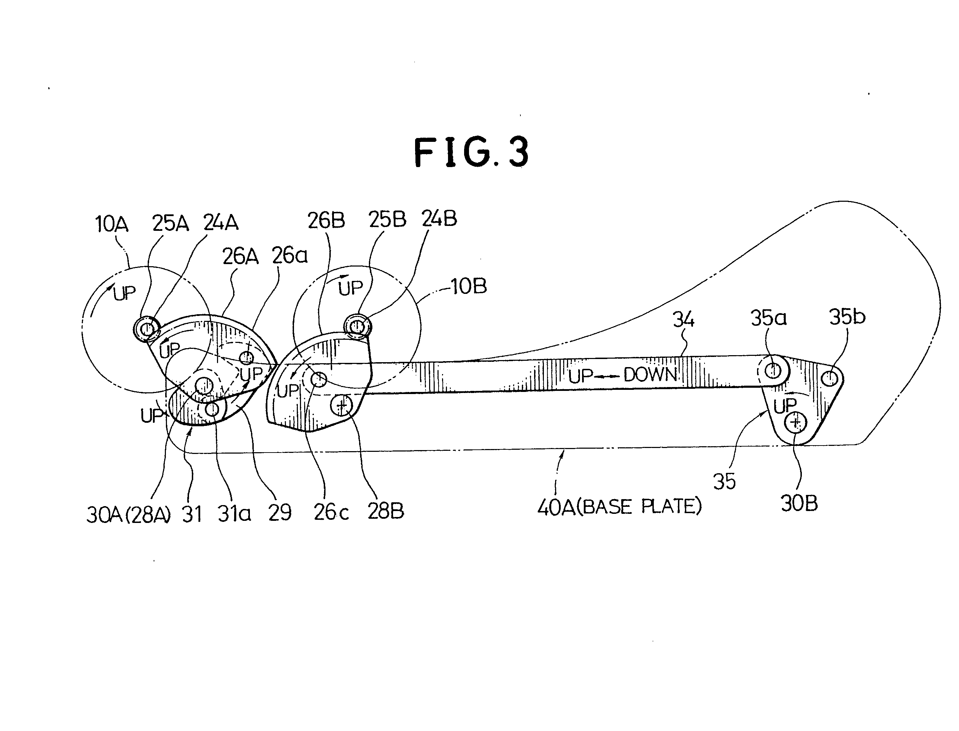

As shown in Fig. 3, a front end of a rear sector gear link 34 is connected to the rear sector gear 26B via a pin 26c. As shown in Fig. 4, a first rear link lever 35 is fixed to the rear shaft 30B.

A rear end of the rear sector gear link 34 is connected to the first rear link lever 35 via a pin 35a. A pin 35b fixed to an end of the first rear link lever 35 is pivotally linked with a hole 63a a formed in a bracket 63 fixed to the rear portion of the seat cushion frame 60.

Similarly, as depicted in Fig. 5, a second rear link lever 36 similar to the first rear link lever 35 in levererage dimension is fixed to the rear shaft 30B. A pin 36a fixed to an end of the second rear link lever 36 is pivotally linked with a hole 64a formed in a bracket 64 fixed to the rear portion of the seat cushion frame 60.

The operation of the seat height adjusting device of the vehicle seat will be described hereinbelow.

When the front seat lift handle 10A is rotated clockwise in Figs. 1 and 3, since the front sector gear 26A is rotated counterclockwise via the front pinion gear 25A, the front shaft 30A coaxial with the axle 28A of the front sector gear 26A rotates also counterclockwise because the shaft 30A is linked with the sector gear 26A by the front sector gear link 31A. Therefore, the four front shaft link levers 31, 29, 32 and 33 (Figs. 4 and 5) also rotate counterclockwise to move up the seat cushion frame 60, so that the front part of the seat cushion SC is adjustably moved in the upward direction. The driver's weight applied to the seat cushion frame 60 can be received by the front spring braking mechanism 27A.

In contrast with this, when the front seat lift handle 10A is rotated counterclockwise in Figs. 1 and 3, since the front sector gear 26A is rotated clockwise via the front pinion gear 25A, the front shaft 30A coaxial with the axle 28A of the front sector gear 26A rotates also clockwise. Therefore, the four front shaft link levers 31, 29, 32 and 33 also rotate clockwise to move down the seat cushion frame 60, so that the front part of the seat cushion SC is adjustably moved in the downward direction.

Further, when the rear seat lift handle 10B is rotated clockwise in Figs. 1 and 3, since the rear sector gear 26B is rotated counterclockwise via the rear pinion gear 25B, the rear sector gear link 34 is moved leftward in Fig. 3. Therefore, the rear shaft 30B is rotated counterclockwise via the first rear shaft link lever 35 to move up the seat cushion frame 60 in cooperation with the second rear shaft link lever 36, so that the rear part of the seat cushion SC is adjustably moved in the upward direction. The driver's weight applied to the seat cushion frame 60 can be received by the rear spring braking mechanism 27B.

In contrast with this, when the rear seat lift handle 10B is rotated counterclockwise in Figs. 1 and 3, since the rear sector gear 26B is rotated clockwise via the rear pinion gear 25B, the rear sector gear link 34 is moved rightward in Fig. 3. Therefore, the rear shaft 30B is rotated clockwise via the first rear shaft link lever 35 to move down the seat cushion frame 60 in cooperation with the second rear shaft link lever 36, so that the rear part of the seat cushion SC is adjustably moved in the downward direction.

In the above-mentioned embodiment, since the two lift handles 10A and 10B and the gear sections of the seat cushion lifting device 20 are unified and housed within the two mounting frames 22A and 22B and additionally the mounting frame 22 is fixed to the seat base plate 40A, it is possible to simply assemble vehicle seats E of two different specifications or types by mounting or removing the mounting frames 22 on or from the seat base plate 40A and two shafts 30A and 30B between the two seat base plates 40A and 40B. In other words, since the common seat base plate 40A can be used for vehicle seats of different models, it is possible to reduce the quality management cost. In the above embodiments, although two seat lift handles 10A and 10B are provided for the vehicle seat to adjustably move up and down both the front and rear portions of the seat cushion, it is of course possible to adjustably move up and down only the front or rear portion of the seat cushion by providing only the one seat lift handle and the related parts.

As described above, in the vehicle seat according to the present invention, since the lift handles and the seat cushion lifting device are assembled into a unit, it is possible to assemble vehicle seats of different types by simply mounting or removing the unified assembly on or from the seat base plate, thus reducing the manufacturing and stock cost thereof.

## Claims

1. A vehicle seat having:

    (a) a seat cushion frame (60) for mounting a seat cushion (SC);
    (b) a pair of seat base plates (40A, 40B) arranged in parallel to each other at an interval;
    (c) at least one seat lift handle (10); and
    (d) a seat lifting device (20) actuated by said seat lift handle, for adjustably lifting said seat cushion frame, said at least one seat lift handle and said seat lifting device being assembled into a unit and removably mounted between a pair of said seat base plates.

2. The vehicle seat of claim 1, wherein said at least one seat lift handle is a seat front lift handle (10A) for adjustably moving up and down a front part of the seat cushion; and said seat lifting device comprises:
    (a) a pair of mounting frames (22A, 22B) fixed to an inside surface of one (40A) of said seat base plates, for rotatably supporting an axle (24A) of said seat front lift handle (10A);
    (b) a front pinion gear (25A) rotatably supported between said two mounting frames and fixed to said seat front lift handle coaxially therewith;
    (c) a front sector gear (26A) rotatably supported between said two mounting frames in mesh with said front pinion gear;
    (d) a front spring brake mechanism (27A) fixed on an outside surface of said mounting frame coaxially with said seat front lift handle;
    (e) a front shaft (30A) rotatably supported between said two seat base plates (40A, 40B) under the front part of said seat cushion frame and coaxially with said front sector gear;
    (f) a front sector gear link (31A) for linking said front sector gear (26A) with said front shaft (30A); and
    (g) at least two front shaft link levers (31, 29, 32, 33) connected between said front shaft (30A) and said seat frame (60), for moving up and down the front part of said seat cushion frame when said seat front lift handle is rotated.

3. The vehicle seat of claim 2, which further comprises:
    (a) a seat rear lift handle (10B) rotatably supported by said mounting frame, for adjustably moving up and down a rear part of the seat cushion;
    (b) a rear pinion gear (25B) rotatably supported between said two mounting frames and fixed to said seat rear lift handle coaxially therewith;
    (c) a rear sector gear (26B) rotatably supported between said two mounting frames in mesh with said rear pinion gear;
    (d) a rear spring brake mechanism (27B) fixed on an outside surface of said mounting frame coaxially with said seat rear lift handle;
    (e) a rear shaft (30B) rotatably supported between said two seat base plates (40A, 40B) under the rear part of said seat cushion frame;
    (f) a rear sector gear link (34) for linking said rear sector gear (26B) with said rear shaft (30B); and
    (g) at least two rear shaft link levers (35, 36) connected between said rear shaft (30B) and said seat cushion frame (60), for moving up and down the rear part of said seat frame when said seat rear handle is rotated.

4. The vehicle seat of claim 3, wherein said mounting frames (22) for housing said two pinion gears (25A, 25B) and said two sector gears (26A, 26B) are disposed on an inside surface of one (40A) of said seat base plates.

5. The vehicle seat of claim 3, wherein said two spring brake mechanisms (27A, 27B) and said two seat lift handles (10A, 10B) are disposed over and outside one (40A) of said seat base plates.

# FIG.1

SB

SC     E

10A(HANDLE)     20(LIFT
           DEVICE) 10B(HANDLE)

25A 24A 26A 22    26B      60   40A   34
   26b    26a    24B
              25B

35a

F ←

→ R

31A

35b

28A 31 31a 29 21 26c 28B   21      50      51    30B   35
                 22a

EP 0 421 301 A2

# FIG.2

EP 0 421 301 A2

FIG.3

# FIG.4

# FIG.5

EP 0 421 301 A2